# EUROPÄISCHE PATENTSCHRIFT

(11) **EP 2 331 365 B1**
(45) Veröffentlichungstag und Bekanntmachung des Hinweises auf die Patenterteilung: **05.03.2014**
(21) Anmeldenummer: 09778038.1
(22) Anmeldetag: 21.08.2009
(51) Int. Cl.: B60N 2/18, B60N 2/44, B60N 2/16

(54) **VERSTELLEINRICHTUNG FÜR DIE HÖHENVERSTELLUNG, INSBESONDERE FÜR DIE VERSTELLUNG DER HÖHE VON SITZKISSEN VON FAHRZEUGSITZEN FÜR KRAFTFAHRZEUGE**
ADJUSTMENT DEVICE FOR THE HEIGHT ADJUSTMENT, IN PARTICULAR FOR THE ADJUSTMENT OF THE HEIGHT OF SEAT CUSHIONS OF VEHICLE SEATS FOR MOTOR VEHICLES
DISPOSITIF DE RÉGLAGE POUR LE RÉGLAGE EN HAUTEUR, EN PARTICULIER POUR LE RÉGLAGE DE LA HAUTEUR DE COUSSINS POUR SIÈGES DE VÉHICULES À MOTEUR

(30) Priorität: 02.09.2008 DE 102008045444; 28.04.2009 DE 102009019188
(43) Veröffentlichungstag der Anmeldung: 15.06.2011
(73) Patentinhaber: Volkswagen Aktiengesellschaft, 38440 Wolfsburg (DE)
(72) Erfinder: KRAMER, Matthias, 38102 Braunschweig (DE); STAHL, Arne, 38518 Gifhorn (DE); WALHORN, Elmar, 38106 Braunschweig (DE)
(86) Internationale Anmeldenummer: PCT/EP2009/006087
(87) Internationale Veröffentlichungsnummer: WO 2010/025838

(56) Entgegenhaltungen:
- EP-A- 0 245 861
- DE-A1-102006 055 967
- DE-C1- 10 015 772
- DE-C1- 10 061 364
- FR-A- 2 596 337

## Beschreibung

Die Erfindung betrifft eine Verstelleinrichtung für eine Höhenverstellung, insbesondere für die Verstellung der Höhe von Sitzkissen von Fahrzeugsitzen für Kraftfahrzeuge, mit den im Oberbegriff des Anspruchs 1 genannten Merkmalen.

Es ist bekannt, zur Erhöhung des Komforts von Kraftfahrzeugen eine Vielzahl von Ausstattungsmerkmalen zu berücksichtigen. Dazu gehören auch die vielfältigsten Ausstattungsmerkmale hinsichtlich der Einstellbarkeit von Fahrzeugsitzen. So wird beispielsweise nicht nur eine Höhenverstellung des Sitzkissens und damit auch des Fahrzeugsitzes ermöglicht, um der Größe des jeweiligen Fahrzeuginsassen zu entsprechen, sondern es wird auch eine Verstellung der Armlehnen hinsichtlich ihrer Höhe gewährleistet. Zur Vornahme der jeweiligen Einstellung sind die vielfältigsten Vorrichtungen bekannt. Um die Höhenverstellung bei den bekannten Varianten vorzunehmen, erfolgt zunächst eine Aktivierung durch elektrische Komponenten oder aber durch mechanische Komponenten. Kommen mechanische Komponenten zur Anwendung, so wird im Wesentlichen ein Verstellhebel eingesetzt, der mit einer unmittelbar mit dem Sitzkissen oder aber mit der Armlehne verbundenen Verstelleinrichtung in Wirkverbindung steht. Dabei kann die dem Sitzkissen von Fahrzeugsitzen zugeordnete Verstelleinrichtung als Hebelantrieb oder als Zahnradantrieb ausgebildet sein, sie kann aber auch ein hydraulischer oder ein pneumatischer Antrieb sein.

So ist beispielsweise nach der DE 100 15 772 C1 eine Betätigungsvorrichtung zum Verstellen von Einstellpositionen eines Kraftfahrzeugsitzes bekannt, die einen Handhebel besitzt, der mit einer als Schrittgetriebe ausgebildeten Verstelleinrichtung in Wirkverbindung steht. Dabei ist der Handhebel mit zwei Mitnahmeelementen und mit einem ersten Schrittgetriebe auf einer ersten Achse angeordnet und besitzt zwei Aussparungen, die mit an den Mitnahmeelementen vorgesehenen Nasen in Wirkverbindung bringbar sind. Während das erste Schrittgetriebe der Verstellung des Sitzteil-Neigungswinkels zugeordnet ist, ist auf einer zweiten Achse ein zweites, der Höhenverstellung des Sitzteiles zugeordnetes Schrittgetriebe vorgesehen. Soll die Sitzhöheverstellt werden, so ist der Handhebel axial einwärts zu kippeln, so dass das zweite Mitnahmeelement in Eingriff mit der zweiten Aussparung des Handhebels kommt. Erfolgt nunmehr eine Pumpbewegung des Handhebels in die eine oder in die andere Richtung, so erfolgt durch eine Übertragungsstange eine Drehbewegung eines weiteren, auf der zweiten Achse angeordneten Mitnahmeelementes, welches bei Drehung das zweite, auf der zweiten Achse angeordnete, der Höhenverstellung des Sitzteiles zugeordnete Schrittgetriebe antreibt, so dass der Kraftfahrzeugsitz entweder angehoben oder abgesenkt wird. Ausgehend davon, dass durch diese Betätigungsvorrichtung zwei Funktionen zu erfüllen sind, ist diese relativ aufwendig und daher auch kostenungünstig. Außerdem erfordert sie auch einen relativ großen Bauraum für Betätigungswege, der nicht immer zur Verfügung steht.

Auch bei der Sitzhöhen-Einstellvorrichtung für einen Kraftfahrzeugsitz nach der DE 37 03 515 A1 ist ein Hebel vorgesehen, der mit einer dem Sitzpolster zugeordneten Verstelleinrichtung in Wirkverbindung steht. Ausgehend davon, dass auch diese Verstelleinrichtung zwei Funktionen zu erfüllen hat und zwar die Einstellung der Neigung der Sitzpolsterfläche sowie die Einstellung der Höhenlage des Sitzgestells gegenüber dem Fahrzeugboden, haftet auch dieser Verstelleinrichtung zumindest der Nachteil an, dass unter Berücksichtigung eines erforderlichen relativ großen Bauraumes für Betätigungswege dieser nicht immer vorhanden ist rund zwar auch dann nicht, wenn es nur um die Verstellung der Höhe des Sitzkissens geht. Dabei ist bei dieser Sitzhöhen-Einstellvorrichtung zwar davon auszugehen, dass bei dieser die Einstellung der Neigung der Sitzpolsteroberfläche durch eine Verstellscheibe und durch dieser zugeordnete Komponenten unabhängig von der durch den Hebel betätigten, der Einstellung der Höhenlage des Sitzgestells dienenden Komponenten der Verstelleinrichtung erfolgt, das führt aber nicht dazu, dass ein ausreichender Bauraum für Betätigungswege unabhängig von der Ausbildung des Fahrzeugsitzes bereitgestellt wird.

Der weiterhin bekannte, selbstarretierende Drehgelenkbeschlag nach der DE 36 16 290 A1, dem ebenfalls ein Betätigungshebel zugeordnet ist, durch dessen Hin- und Herbewegen der Drehgelenkbeschlag winkelverstellbar ist, ist zwar dafür vorgesehen, um nicht nur eine Rückenlehnen-Neigungsverstellung, sondern auch eine Sitzhöhenverstellung von Fahrzeugsitzen vorzunehmen, aber zur Durchführung dieser Funktionen erfordert dieser selbstarretierende Drehgelenkbeschlag im Zusammenwirken mit dem Betätigungshebel ausgehend von den erforderlichen Komponenten und unter Berücksichtigung ihrer Ausbildung ebenfalls einen relativ hohen Aufwand und ist somit auch mit relativ hohen Kosten verbunden. Ein erforderlicher Bauraum für Betätigungswege steht auch bei diesem selbstarretierenden Drehgelenkbeschlag mit seinem Betätigungshebel nicht bei jedem Fahrzeugsitz zur Verfügung.

Aus der DE 10 2006 055967 ist eine Verstelleinrichtung mit einem Verstellhebel mit den Merkmalen des Oberbegriffs von Anspruch 1 bekannt.

Der Erfindung liegt die Aufgabe zugrunde, eine Verstelleinrichtung für die Höhenverstellung, insbesondere für die Verstellung der Höhe von Sitzkissen von Fahrzeugsitzen für Kraftfahrzeuge, zu schaffen, durch die bei geringem Aufwand und damit auch kostengünstig ein relativ großer Bauraum für Betätigungswege und zwar unabhängig von der jeweiligen Ausbildung des Sitzkissens und somit auch des Fahrzeugsitzes zur Verfügung gestellt wird, wobei unter Berücksichtigung eines idealen Design gleichzeitig zu berücksichtigen ist, dass nicht nur eine optimale Bedienbarkeit zu gewährleisten ist, sondern auch ein störungsfreies Ein- und Aussteigen.

Dadurch, dass erfindungsgemäß der Verstellhebel gemäß dem Oberbegriff des Anspruchs 1 nach dem Erreichen der gewünschten Höheneinstellung entkoppelbar ist und eine Kulissenführung besitzt, über die der Verstellhebel vorzugsweise über einen Schraubbolzen mit der Verstelleinrichtung verbunden ist, derart, dass bei Aufwärtsbewegung des Verstellhebels aus einer durch die Kulissenführung gebildeten Parkposition in eine ebenfalls durch die Kulissenführung gebildete Betätigungsnulllage der Verstellhebel in diese automatisch federvorgespannt einrastbar ist, so dass die Verstelleinrichtung durch den Verstellhebel formschlüssig in beide Richtungen betätigbar ist, wird ein Verstellhebel für die Höhenverstellung, insbesondere für die Verstellung der Höhe von Sitzkissen von Fahrzeugsitzen, bereitgestellt, durch den unabhängig von der Ausbildung des Sitzkissens und damit des Fahrzeugsitzes bei kostengünstiger Ausbildung ein relativ großer Bauraum für Betätigungswege zur Verfügung gestellt wird.

In bevorzugter Ausgestaltung der Erfindung ist die Kulissenführung des Verstellhebels durch ein Langloch gebildet, das einen die Schwenkbewegung des Verstellhebels berücksichtigenden Radius und im Bereich der Betätigungsnulllage des Verstellhebels eine in Richtung der Achse des Verstellhebels verlaufende Ausbuchtung besitzt, durch die die Betätigungsnulllage durch Einrasten des Schwenkhebels gebildet ist, während die Parkposition des Schwenkhebels durch Anliegen des Schraubbolzens am Langloch auf der der Ausbuchtung gegenüberliegenden Seite des Langloches gebildet ist. Dabei steht der Schraubbolzen, über den der Verstellhebel mit der Verstelleinrichtung verbunden ist, vorzugsweise über ein Adapterblech mit der Verstelleinrichtung in Verbindung.

Weitere bevorzugte Ausgestaltungen der Erfindung ergeben sich aus den übrigen, in den Unteransprüchen genannten Merkmalen.

Danach ist gemäß einem dieser Merkmale bei einem Druck auf den Verstellhebel in vertikaler Richtung zur Betätigungsrichtung des Verstellhebels dieser automatisch aus der in Richtung der Achse des Verstellhebels verlaufenden Ausnehmung des Langloches ausrastbar und federvorgespannt in seine Parkposition schwenkbar.

Gemäß einer weiteren Variante werden die durch die Erfindung beabsichtigten Wirkungen auch durch eine Verstelleinrichtung erreicht, bei der erfindungsgemäß in den Verstellhebel ein Betätigungsknopf integriert ist, der über einen diesem zugeordneten Hebel mit dem Adapterblech verbunden ist, derart, dass beim Drücken des Betätigungsknopfes und der sich daraus resultierenden Betätigung des Verstellhebels nach oben in die Betätigungsnulllage die Verriegelung des Adapterbleches mit dem Getriebeaufnahmeblech der Verstelleinrichtung lösbar ist. Durch eine Entlastung des in den Verstellhebel integrierten Betätigungsknopfes und der sich aus dieser Entlastung ergebenden Entlastung der Verriegelung des mit dem Getriebeaufnahmeblech der Verstelleinrichtung in Wirkverbindung stehenden Adapterbleches ist der Verstellhebel federbelastet in seine Ausgangslage und damit in seine Parkposition zurückführbar und in dieser Parkposition verriegelbar.

Während bei beiden Varianten der Verstelleinrichtung zur Erzielung der angestrebten Vorspannung des Verstellhebels ein Federkörper vorgesehen ist, der einerseits mit dem Verstellhebel und andererseits mit der Verstelleinrichtung verbunden ist, sieht die Variante der Verstelleinrichtung, bei der bei einem Druck auf den Verstellhebel in vertikaler Richtung zur Betätigungsrichtung des Verstellhebels dieser automatisch aus der in Richtung der Achse des Verstellhebels verlaufenden Ausbuchtung des Langloches ausrastbar ist, vor, dass der schwenkbar über die Achse gelagerte Verstellhebel über diese Achse auch verschiebbar angeordnet ist. Dadurch wird erreicht, dass bei einem Druck auf den Verstellhebel in vertikaler Richtung zur Betätigungsrichtung des Verstellhebels dieser der daraus resultierenden Bewegung folgen kann.

Um diese verschiebbare Anordnung des Verstellhebels über die Achse zu ermöglichen, besitzt der Verstellhebel ein die Achse aufnehmendes Langloch, das in Richtung des Verstellhebels verlaufend ausgebildet ist, derart, dass sowohl in der durch die Kulissenführung gebildeten Parkposition als auch in der durch die Kulissenführung gebildeten Betätigungsnulllage durch formschlüssiges Anliegen des Verstellhebels an der Wandung des Langloches eine funktionsfähige Führung des Verstellhebels besteht.

Eine stets sichere Aufnahme des erfindungsgemäß ausgebildeten Verstellhebels bei seiner Schwenkbewegung wird, unabhängig von seiner jeweiligen Ausbildung und Anordnung vorteilhafterweise dadurch unterstützt, dass vorzugsweise auf der der Kulissenführung des Verstellhebels gegenüberliegenden Seite ein als Führung des Verstellhebels dienender Bolzen vorgesehen ist, der mit der Verstelleinrichtung verbunden ist und mit einer im Verstellhebel vorgesehenen Führung in Wirkverbindung steht, indem dieser in die Führung hineinragbar ist. Diese Führung innerhalb des Verstellhebels ist ebenfalls als Langloch ausgebildet und besitzt einen die Schwenkbewegung des Verstellhebels berücksichtigenden Radius.

Mit der Erfindung werden die beabsichtigten Wirkungen, insbesondere aber auch eine optimale Bedienbarkeit der Verstelleinrichtung sowie das störungsfreie Ein- und Aussteigen bei Bereitstellung eines ansprechenden Designs erzielt.

Es versteht sich, dass der Verstellhebel nach der Erfindung nicht nur zur Verstellung der Höhe des Sitzkissens von Fahrzeugsitzen geeignet ist, sondern die durch diesen Verstellhebel beabsichtigten Wirkungen werden auch dann erzielt, wenn beispielsweise dieser Verstellhebel unabhängig von seiner jeweiligen erfindungsgemäßen Ausbildung zur Verstellung der Höhe von Armlehnen, so von Kraftfahrzeugen, eingesetzt wird. Das schließt nicht aus, dass die beabsichtigten Wirkungen auch dann unabhängig vom jeweiligen technischen Gebiet zu verzeichnen sind, wenn es darum geht, eine beliebige Komponente in ihrer Höhe zu verstellen.

Die Erfindung wird nachfolgend in Ausführungsbeispielen anhand der zugehörigen Zeichnungen erläutert. Es zeigen:
- Figur 1: einen Verstellhebel einer Verstelleinrichtung zur Höhenverstellung des Sitzkissens von Fahrzeugsitzen,
- Figur 2: eine weitere Variante eines Verstellhebels einer Verstelleinrichtung einer Verstelleinrichtung zur Höhenverstellung des Sitzkissens von Fahrzeugsitzen.

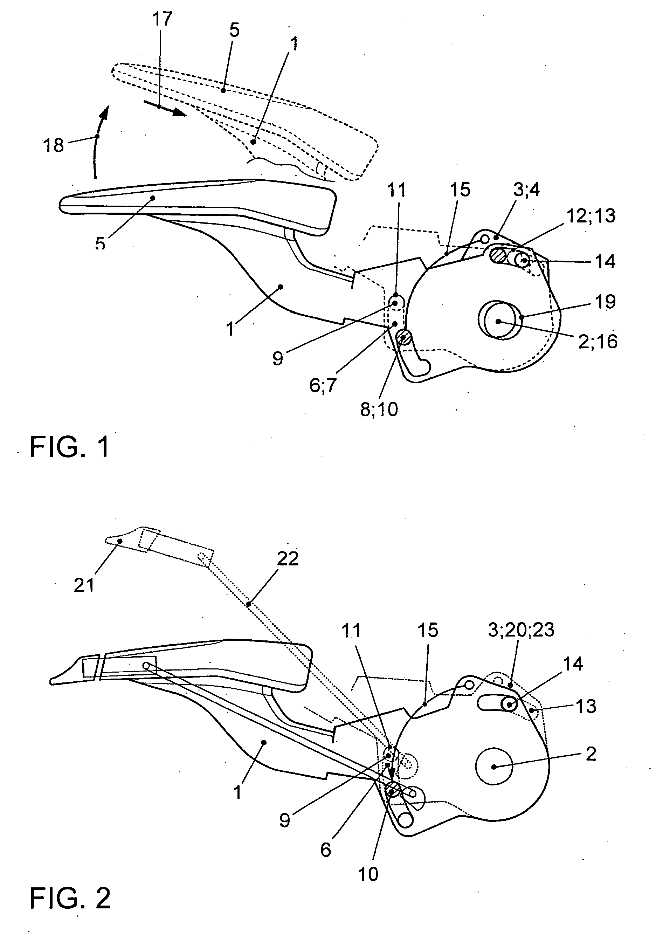

Figur 1 zeigt einen Verstellhebel 1 der über eine Achse 2 schwenkbar gelagert ist, über die dieser mit einer Verstelleinrichtung 3, von der lediglich eine Komponente 4 angedeutet ist, zur Höhenverstellung des Sitzkissens in beide Richtungen in Verbindung steht. Im Bereich der Achse 2 auf der dem Handgriff 5 des Verstellhebels 1 zugerichteten Seite besitzt der Verstellhebel 1 eine Kulissenführung 6, die durch ein Langloch 7 gebildet ist, das einen die Schwenkbewegung des Verstellhebels 1 berücksichtigenden Radius besitzt. An seinem nach unten gerichteten Ende ist dem Langloch 7 eine Ausbuchtung 8 zugeordnet, die in Richtung der Achse 2 verläuft. Das Langloch 7 nimmt einen Schraubbolzen 9 auf, so dass über diesen im Zusammenwirken mit der Kulissenführung 6 der Schwenkhebels 1 mit der Komponente 4 der Verstelleinrichtung 3 ebenfalls in Verbindung steht. Während bei den Bewegungsabläufen des Verstellhebels 1 zwecks Höhenverstellung die Ausbuchtung 8 des Langloches 7 der Kulissenführung 6 als Betätigungsnulllage 10 für den Verstellhebel 1 dient, resultiert die . Parkposition 11 des Schwenkhebels 1 aus dem Anliegen des Schraubbolzens 9 an dem Langloch 7 und zwar auf der der Ausbuchtung 8 des Langloches 7 gegenüberliegenden Seite. Auf der der Kulissenführung 6 des Verstellhebels 1 gegenüberliegenden Seite besitzt dieser zu seiner sicheren Aufnahme bei allen Bewegungsabläufen weiterhin ein als Führung 12 dienendes Langloch 13, das ebenfalls einen die Schwenkbewegung des Verstellhebels 1 berücksichtigenden Radius besitzt und in das ein mit der Komponente 4 der Verstelleinrichtung 3 verbundener Bolzen 14 hineinragt.

Wie die Figur 1 weiterhin zeigt, steht der Verstellhebel 1 mit der Komponente 4 der Verstelleinrichtung 3 auch mit einem Federkörper 15 in Verbindung und zwar derart, dass der Verstellhebel 1 unter Vorspannung gehalten wird. Weiterhin ist der schwenkbar gelagerte Verstellhebel 1 aber auch verschiebbar angeordnet, indem der Achse 2 ein Langloch 16 zugeordnet ist, so dass bei einem Druck auf den Verstellhebel 1 in vertikaler Richtung 17 zu seiner Betätigungsrichtung 18 dieser der aus dem Druck resultierenden Bewegung folgen kann und somit stets ein formschlüssiges Anliegen des Verstellhebels 1 auch an der Wandung 19 des Langloches 16 gewährleistet ist.

Soll ausgehend von dieser Ausbildung des Verstellhebels 1 eine Aufwärtsbewegung des Verstellhebels 1 erfolgen, der nach dieser Aufwärtsbewegung die Position einnimmt, die der oberen Darstellung des Handgriffs 5 des Verstellhebels 1 entspricht, so verlässt dieser und damit der Schraubbolzen 9 die Parkposition 11 innerhalb des Langloches 7 der Kulissenführung 6 und gelangt über den Schraubbolzen 9 in die Ausbuchtung 8 des Langloches 7 der Kulissenführung 6 und somit in die Betätigungsnulllage 10 und rastet bedingt durch die durch den mit der Komponente 4 der Verstelleinrichtung 3 in Verbindung stehenden Federkörper 15 automatisch in die Ausbuchtung 8 ein. In dieser Position kann nunmehr der Verstellhebel 1 formschlüssig die Verstelleinrichtung 3 in beide Richtungen betätigen. Die Postition des Schraubbolzens 9, die dieser in der Betätigungsnulllage 10 einnimmt, ist schraffiert dargestellt.

Ist nunmehr der Verstellhebel 1 wieder aus dieser Betätigungsnulllage 10 in die Parkposition 11 zurückzuführen, so erfolgt eine Entriegelung des Verstellhebels 1, indem ein Druck auf den Verstellhebel 1 ausgeübt wird und zwar in vertikaler Richtung 17 zur Betätigungsrichtung 18 des Verstellhebels 1 bei seiner Schwenkbewegung. Dabei rastet der Verstellhebel 1 automatisch aus der Ausbuchtung 8 des Langloches 7 der Kulissenführung 6 aus und fährt durch den Federkörper 15 vorgespannt in seine Parkposition 11.

Gemäß Figur 2 ist der dort gezeigte Verstellhebels 1 ebenfalls über eine Achse 2 schwenkbar gelagert und steht mit der Verstelleinrichtung 3 über ein Adapterblech 20 zur Höhenverstellung des Sitzkissens in beide Richtungen in Verbindung. Gegenüber der Ausbildung des Verstellhebels nach Figur 1 ist der Verstellhebel 1 jedoch nicht über ein der Achse 2 zugeordnetes Langloch 16 verschiebbar angeordnet, sondern in den Verstellhebel 1 gemäß Figur 2 ist ein Betätigungsknopf 21 integriert, der über einen zugeordneten Hebel 22 mit dem Adapterblech 20 in Wirkverbindung steht. Wird der Betätigungshebel 21 durch Drücken betätigt, so kann der Verstellhebel 1, der auch hier über einen von einer Kulissenführung 6 aufgenommenen, mit der Verstelleinrichtung 3 in Form eines Getriebes in Verbindung stehenden Schraubbolzen 9 geführt wird, nach oben in die Betätigungsnulllage 10 geschwenkt werden. Daraus resultiert, dass die Verriegelung des Adapterbleches 20 mit der Komponente 4 (Figur1) der Verstelleinrichtung 3 , die vorzugsweise ein Getriebeaufnahmeblech 23 ist, gelöst werden kann, so dass durch den Verstellhebel 1 die gewünschte Höherieinstellung des Sitzkissen vornehmbar ist. Erfolgt nach der Höheneinstellung des Sitzkissens eine Entlastung des in den Verstellhebel 1 integrierten Betätigungsknopfes 21, was auch zu einer Entlastung der Verriegelung des Adapterbleches 20 und somit des Getriebeaufnahmebleches 23 der Verstelleinrichtung 3 führt, so wird der Verstellhebel 1, der unter der Wirkung des Federkörpers 15 steht, in seine Parkposition 11 zurückgeführt und.wird in dieser nunmehr eingenommenen Ausgangslage verriegelt. Bei allen Bewegungsvorgängen des Verstellhebels 1 ist eine sichere Aufnahme des Verstellhebels 1 gewährleistet, indem der Verstellhebel 1 auf der der Kulissenführung 6 gegenüberliegenden Seite analog dem Verstellhebel 1 nach Figur 1 ein als Führung dienendes Langloch 13 mit einem die Schwenkbewegung des Verstellhebels 1 berücksichtigenden Radius besitzt, in das ein mit dem Getriebeaufnahmeblech 23 der Verstelleinrichtung 3 in Form eines Getriebes verbundener Bolzen 14 hineinragt.

### Bezugszeichenliste

- 1: Verstellhebel
- 2: Achse
- 3: Verstelleinrichtung
- 4: Komponente
- 5: Handgriff
- 6: Kulissenführung
- 7, 13, 16: Langlöcher
- 8: Ausbuchtung
- 9: Schraubbolzen
- 10: Betätigungsnulllage
- 11: Parkposition
- 12: Führung
- 14: Bolzen
- 15: Federkörper
- 17: vertikale Richtung
- 18: Betätigungsrichtung
- 19: Wandung
- 20: Adapterblech
- 21: Betätigungsknopf
- 22: Hebel
- 23: Getriebeaufnahmeblech

## Patentansprüche

1. Verstelleinrichtung (3) für eine Höhenverstellung, insbesondere für die Verstellung der Höhe von Sitzkissen von Fahrzeugsitzen für Kraftfahrzeuge, mit einem Verstellhebel (1), der über eine Achse (2) schwenkbar gelagert mit der Verstelleinrichtung (3) zur Höhenverstellung des Sitzkissens in beide Richtungen in Wirkverbindung steht,
wobei
der Verstellhebel (1) nach dem Erreichen der gewünschten Höheneinstellung entkoppelbar ist und eine Kulissenführung (6) besitzt, über die der Verstellhebel (1), vorzugsweise über einen Schraubbolzen (9), mit der Verstelleinrichtung (3) verbunden ist, **dadurch gekennzeichnet, dass** der Verstellhebel (1) federvorgespannt ist, derart, dass bei Aufwärtsbewegung des Verstellhebels (1) aus einer durch die Kulissenführung (6) gebildeten Parkposition (11) in eine ebenfalls durch die Kulissenführung (6) gebildete Betätigungsnulllage (10) der Verstellhebel (1) in diese automatisch federvorgespannt einrastbar ist, so dass die Verstelleinrichtung (3) durch den Verstellhebel (1) formschlüssig in beide Richtungen betätigbar ist.

2. Verstelleinrichtung nach Anspruch 1,
**dadurch gekennzeichnet, dass**
die Kulissenführung (6) des Verstellhebels (1) durch ein Langloch (7) gebildet ist, das einen die Schwenkbewegung des Verstellhebels (1) berücksichtigenden Radius und im Bereich der Betätigungsnulllage (10) des Verstellhebels (1) eine in Richtung der Achse (2) des Verstellhebels (1) verlaufende Ausbuchtung (8) besitzt, durch die die Betätigungsnulllage (10) durch Einrasten des Verstellhebels (1) gebildet ist, während die Parkposition (11) des Schwenkhebels (1) durch Anliegen des Schraubbolzens (9) am Langloch (7) auf der der Ausbuchtung (8) gegenüberliegenden Seite des Langloches (7) gebildet ist.

3. Verstelleinrichtung nach Anspruch 2,
**dadurch gekennzeichnet, dass**
der Schraubbolzen (9), über den der Verstellhebel (1) mit der Verstelleinrichtung (3) verbunden ist, über ein Adapterblech (20) mit der Verstelleinrichtung (3) in Verbindung steht.

4. Verstelleinrichtung nach Anspruch 3,
**dadurch gekennzeichnet, dass**
bei einem Druck auf den Verstellhebel (1) in vertikaler Richtung (17) zur Betätigungsrichtung (18) des Verstellhebels (1) dieser automatisch aus der in Richtung der Achse (2) des Verstellhebels (1) verlaufenden Ausbuchtung (8) des Langloches (7) ausrastbar und federvorgespannt in seine Parkposition (11) schwenkbar ist.

5. Verstelleinrichtung nach Anspruch 3,
**dadurch gekennzeichnet, dass**
in den Verstellhebel (1), ein Betätigungsknopf (21) integriert ist, der über einen diesem zugeordneten Hebel (22) mit dem Adapterblech (20) verbunden ist, derart, dass beim Drücken des Betätigungsknopfes (21) und der sich daraus resultierenden Betätigung des Verstellhebels (1) nach oben in die Betätigungsnulllage (10) die Verriegelung des Adapterbleches (20) mit dem Getriebeaufnahmeblech (23) der Verstelleinrichtung (3) lösbar ist.

6. Verstelleinrichtung nach Anspruch 5,
**dadurch gekennzeichnet, dass**
durch eine Entlastung des in den Verstellhebel (1) integrierten Betätigungsknopfes (21) und der sich aus dieser Entlastung ergebenden Entlastung der Verriegelung des mit dem Getriebeaufnahmeblech (23) der Verstelleinrichtung (3) in Wirkverbindung stehenden Adapterbleches (20) der Verstellhebel (1) federbelastet in seine Ausgangslage und damit in seine Parkposition (11) zurückführbar und in dieser Parkposition (11) verriegelbar ist.

7. Verstelleinrichtung nach Anspruch 4 und 6,
**dadurch gekennzeichnet, dass**
zur Vorspannung des Verstellhebels (1) ein Federkörper (15) vorgesehen ist, der einerseits mit dem Verstellhebel (1) und andererseits mit der Verstelleinrichtung (3) verbunden ist.

8. Verstelleinrichtung nach Anspruch 4,
**dadurch gekennzeichnet, dass**
der schwenkbar über die Achse (2) gelagerte Verstellhebel (1) über diese Achse (2) verschiebbar angeordnet ist.

9. Verstelleinrichtung nach Anspruch 8,
**dadurch gekennzeichnet, dass**
zur verschiebbaren Anordnung des Verstellhebels (1) über die Achse (2) der Verstellhebel (1) ein die Achse (2) aufnehmendes Langloch (16) besitzt, das in Richtung des Verstellhebels (1) verlaufend ausgebildet ist, derart, dass sowohl in der durch die Kulissenführung (6) gebildeten Parkposition (11) als auch in der durch die Kulissenführung (6) gebildeten Betätigungsnulllage (10) durch formschlüssiges Anliegen des Verstellhebels (1) an der Wandung (19) des Langloches (16) eine funktionsfähige Führung des Verstellhebels (1) gebildet ist.

10. Verstelleinrichtung nach Anspruch 2,
**dadurch gekennzeichnet, dass**
vorzugsweise auf der der Kulissenführung (6) des Verstellhebels (1) gegenüberliegenden Seite ein als Führung für den Verstellhebel (1) dienender Bolzen (14) vorgesehen ist, der mit der Verstelleinrichtung (3) verbunden ist und mit einer im Verstellhebel (1) vorgesehenen Führung (12) in Wirkverbindung steht, indem dieser in die Führung (12) hineinragbar ist.

11. Verstelleinrichtung nach Anspruch 10,
**dadurch gekennzeichnet, dass**
die Führung (12) innerhalb des Verstellhebels (1) als Langloch (13) ausgebildet ist.

12. Verstelleinrichtung nach Anspruch 11,
**dadurch gekennzeichnet, dass**
das Langloch (13) einen die Schwenkbewegung des Verstellhebels (1) berücksichtigenden Radius besitzt.

## Claims

1. Adjustment device (3) for a height adjustment, in particular for the adjustment of the height of seat cushions of vehicle seats for motor vehicles, with an adjustment lever (1) which, mounted pivotably via a spindle (2), is operatively connected to the adjustment device (3) for adjusting the height of the seat cushion in both directions, wherein the adjustment lever (1) can be decoupled after the desired height setting is reached and has a slotted guide (6) via which the adjustment lever (1) is connected to the adjustment device (3), preferably by a screw bolt (9), **characterized in that** the adjustment lever (1) is spring-preloaded in such a manner that, during the upwards movement of the adjustment lever (1) out of a parking position (11), which is formed by the slotted guide (6), into an actuation zero position (10), which is likewise formed by the slotted guide (6), the adjustment lever (1) can be latched automatically in a spring-preloaded manner into said actuation zero position such that the adjustment device (3) can be actuated in an interlocking manner in both directions by the adjustment lever (1).

2. Adjustment device according to Claim 1, **characterized in that** the slotted guide (6) of the adjustment lever (1) is formed by an elongated hole (7) which has a radius taking the pivoting movement of the adjustment lever (1) into consideration and, in the region of the actuation zero position (10) of the adjustment lever (1), has a bulge (8) which runs in the direction of the spindle (2) of the adjustment lever (1) and by means of which the actuation zero position (10) is formed by the adjustment lever (1) latching therein, while the parking position (11) of the pivot lever (1) is formed by the screw bolt (9) bearing on the elongated hole (7) on that side of the elongated hole (7) which is opposite the bulge (8).

3. Adjustment device according to Claim 2, **characterized in that** the screw bolt (9) via which the adjustment lever (1) is connected to the adjustment device (3) is connected to the adjustment device (3) via an adapter plate (20).

4. Adjustment device according to Claim 3, **characterized in that**, in the event of pressure being exerted on the adjustment lever (1) in a direction (17) perpendicular to the actuating direction (18) of the adjustment lever (1), the latter can be automatically disengaged from the bulge (8) of the elongated hole (7), said bulge running in the direction of the spindle (2) of the adjustment lever (1), and can be pivoted in a spring-preloaded manner into its parking position (11).

5. Adjustment device according to Claim 3, **characterized in that** an actuating button (21) is integrated in the adjustment lever (1), said actuating button being connected via a lever (22), which is assigned thereto, to the adapter plate (20) in such a manner that, in the event of pressing of the actuating button (21) and the resulting actuation of the adjustment lever (1) upwards into the actuation zero position (10), the locking of the adapter plate (20) to the gearing receiving plate (23) of the adjustment device (3) can be released.

6. Adjustment device according to Claim 5, **characterized in that**, by means of release of the actuating button (21) integrated in the adjustment lever (1) and the resulting release of the locking of the adapter plate (20) which is operatively connected to the gearing receiving plate (23) of the adjustment device (3), the adjustment lever (1) can be returned in a spring-loaded manner back into its starting position and therefore into its parking position (11) and can be locked in said parking position (11).

7. Adjustment device according to Claims 4 and 6, **characterized in that** a spring element (15) which is connected at one end to the adjustment lever (1) and at the other end to the adjustment device (3) is provided for preloading the adjustment lever (1).

8. Adjustment device according to Claim 4, **characterized in that** the adjustment lever (1) which is mounted pivotably via the spindle (2) is arranged displaceably via said spindle (2).

9. Adjustment device according to Claim 8, **characterized in that**, for the displaceable arrangement of the adjustment lever (1) via the spindle (2), the adjustment lever (1) has an elongated hole (16) which accommodates the spindle (2) and is designed so as to run in the direction of the adjustment lever (1) in such a manner that, both in the parking position (11) formed by the slotted guide (6) and in the actuation zero position (10) formed by the slotted guide (6), an operational guide for the adjustment lever (1) is formed by the adjustment lever (1) bearing in an interlocking manner on the wall (19) of the elongated hole (16).

10. Adjustment device according to Claim 2, **characterized in that** a bolt (14) serving as a guide for the adjustment lever (1) is preferably provided on the side opposite the slotted guide (6) of the adjustment lever (1), said bolt being connected to the adjustment device (3) and being operatively connected to a guide (12) provided in the adjustment lever (1) by the latter being able to project into the guide (12).

11. Adjustment device according to Claim 10, **characterized in that** the guide (12) is designed as an elongated hole (13) within the adjustment lever (1).

12. Adjustment device according to Claim 11, **characterized in that** the elongated hole (13) has a radius taking the pivoting movement of the adjustment lever (1) into consideration.

## Revendications

1. Dispositif de réglage (3) pour un réglage en hauteur, en particulier pour le réglage de la hauteur de coussins de siège de sièges de véhicule pour des véhicules automobiles, comprenant un levier de réglage (1) qui est monté pivotant par le biais d'un axe (2) et est en liaison fonctionnelle avec le dispositif de réglage (3) pour le réglage en hauteur du coussin de siège dans les deux sens,
le levier de réglage (1) pouvant être désaccouplé après que l'ajustement en hauteur souhaité a été atteint et possédant un guide à coulisse (6) par le biais duquel le levier de réglage (1) est relié au dispositif de réglage (3), de préférence par le biais d'un boulon fileté (9),
**caractérisé en ce que** le levier de réglage (1) est précontraint par ressort de telle sorte que, lors d'un mouvement vers le haut du levier de réglage (1) à partir d'une position de rangement (11) formée par le guide à coulisse (6) à une position neutre d'actionnement (10) également formée par le guide à coulisse (6), le levier de réglage (1) puisse être encliqueté automatiquement de manière précontrainte par ressort dans cette position neutre d'actionnement, de telle sorte que le dispositif de réglage (3) puisse être actionné par engagement positif dans les deux sens au moyen du levier de réglage (1).

2. Dispositif de réglage selon la revendication 1,
**caractérisé en ce que**
le guide à coulisse (6) du levier de réglage (1) est formé par un trou oblong (7) qui possède un rayon prenant en compte le mouvement de pivotement du levier de réglage (1) et, dans la région de la position neutre d'actionnement (10) du levier de réglage (1), un renflement (8) s'étendant dans la direction de l'axe (2) du levier de réglage (1), au moyen duquel renflement la position neutre d'actionnement (10) est formée par encliquetage du levier de réglage (1), tandis que la position de rangement (11) du levier pivotant (1) est formée par application du boulon .fileté (9) contre le trou oblong (7) du côté du trou oblong (7) opposé au renflement (8).

3. Dispositif de réglage selon la revendication 2,
**caractérisé en ce que**
le boulon fileté (9), par le biais duquel le levier de réglage (1) est relié au dispositif de réglage (3), est en liaison avec le dispositif de réglage (3) par le biais d'une tôle d'adaptation (20).

4. Dispositif de réglage selon la revendication 3,
**caractérisé en ce que**,
lors d'une pression sur le levier de réglage (1) dans la direction verticale (17) par rapport à la direction d'actionnement (18) du levier de réglage (1), ce dernier peut être automatiquement dégagé hors du renflement (8) du trou oblong (7) s'étendant en direction de l'axe (2) du levier de réglage (1) et peut être pivoté de manière précontrainte par ressort dans sa position de rangement (11).

5. Dispositif de réglage selon la revendication 3,
**caractérisé en ce**
**qu'**un bouton d'actionnement (21) est intégré dans le levier de réglage (1), lequel bouton d'actionnement est relié, par le biais d'un levier (22) qui lui est associé, à la tôle d'adaptation (20), de telle sorte que, lors de la pression du bouton d'actionnement (21) et de l'actionnement du levier de réglage (1) qui en résulte vers le haut dans la position neutre d'actionnement (10), le verrouillage de la tôle d'adaptation (20) puisse être déverrouillé à l'aide de la tôle de logement de transmission (23) du dispositif de réglage (3).

6. Dispositif de réglage selon la revendication 5,
**caractérisé en ce que**,
par une détente du bouton d'actionnement (21) intégré dans le levier de réglage (1) et la détente, résultant de cette détente, du verrouillage de la tôle d'adaptation (20) en liaison fonctionnelle avec la tôle de logement de transmission (23) du dispositif de réglage (3), le levier de réglage (1) peut être ramené, de manière précontrainte par ressort, à sa position initiale et par conséquent à sa position de rangement (11) et peut être verrouillé dans cette position de rangement (11).

7. Dispositif de réglage selon les revendications 4 et 6,
**caractérisé en ce**
**qu'**un corps élastique (15) est prévu pour la précontrainte du levier de réglage (1), lequel corps élastique est d'une part relié au levier de réglage (1) et d'autre part relié au dispositif de réglage (3).

8. Dispositif de réglage selon la revendication 4,
**caractérisé en ce que**
le levier de réglage (1) monté pivotant par le biais de l'axe (2) est disposé de manière coulissante par le biais de cet axe (2).

9. Dispositif de réglage selon la revendication 8,
**caractérisé en ce que**,
pour l'agencement coulissant du levier de réglage (1) par le biais de l'axe (2), le levier de réglage (1) possède un trou oblong (16) logeant l'axe (2), lequel trou oblong est réalisé de manière à s'étendre en direction du levier de réglage (1), de telle sorte qu'un guidage fonctionnel du levier de réglage (1) soit formé par application par engagement positif du levier de réglage (1) contre la paroi (19) du trou oblong (16) non seulement dans la position de rangement (11) formée par le guide à coulisse (6) mais aussi dans la position neutre d'actionnement (10) formée par le guide à coulisse (6).

10. Dispositif de réglage selon la revendication 2,
**caractérisé en ce**
**qu'**il est prévu, de préférence du côté opposé au guide à coulisse (6) du levier de réglage (1), un boulon (14) servant de guide pour le levier de réglage (1), lequel boulon est relié au dispositif de réglage (3) et est en liaison fonctionnelle avec un guide (12) prévu dans le levier de réglage (1), par le fait que celui-ci peut pénétrer dans le guide (12).

11. Dispositif de réglage selon la revendication 10,
**caractérisé en ce que**
le guide (12) est réalisé sous forme de trou oblong (13) à l'intérieur du levier de réglage (1).

12. Dispositif de réglage selon la revendication 11, **caractérisé en ce que** le,trou oblong (13) présente un rayon prenant en compte le mouvement de pivotement du levier de réglage (1).
